# EUROPEAN PATENT SPECIFICATION

(11) **EP 3 822 597 B1**
(45) Date of publication and mention of the grant of the patent: **02.10.2024**
(21) Application number: 19867114.1
(22) Date of filing: 20.08.2019
(51) Int. Cl.: G01K 1/20

(54) **SENSOR DEVICE**
SENSORVORRICHTUNG
DISPOSITIF CAPTEUR

(30) Priority: 28.09.2018 JP 2018183805
(43) Date of publication of application: 19.05.2021
(60) Divisional application: 23208567.0
(73) Proprietor: DIC Corporation, Tokyo 174-8520 (JP)
(72) Inventor: NISHI, Hidefumi, Sakura-shi, Chiba 285-8668 (JP); TAJIMA, Shinichi, Kawasaki-shi, Kanagawa 212-8510 (JP); BABA, Shunji, Kawasaki-shi, Kanagawa 212-8510 (JP)
(74) Representative: Kraus & Lederer PartGmbB
(86) International application number: PCT/JP2019/032398
(87) International publication number: WO 2020/066366

(56) References cited:
- EP-A1- 0 962 718
- EP-A2- 2 749 855
- JP-A- 2008 139 183
- JP-A- 2014 044 126
- JP-A- 2014 153 310
- JP-A- 2017 058 279
- JP-A- 2017 156 275
- US-A1- 2015 297 146

## Description

### Technical Field

The technology disclosed in the present application relates to a sensor device.

### Background Art

Sensor devices including a substrate and a temperature sensor mounted on the substrate are known (see, for example, PTLs 1 and 2).

### Citation List

### Patent Literature

PTL 1: Japanese Unexamined Patent Application Publication No. 2005-340925
PTL 2: Japanese Unexamined Patent Application Publication No. 3-156331
PTL 3: Japanese Unexamined Utility Model Registration Application Publication No. 5-52727
PTL 4: EP 0 962 718 A1 (MATSUSHITA ELECTRIC IND CO LTD [JP]) 8 December 1999
PTL 5: EP 2 749 855 A2 (SENSATA TECH MASSACHUSETTS INC [US]) 2 July 2014

### Summary of Invention

### Technical Problem

When a sensor device is installed on an installation surface to detect the ambient temperature around the sensor device by using a temperature sensor, if the temperature sensor receives thermal effect of the installation surface, the ability of the temperature sensor to follow a change in the ambient temperature may be impaired. The ambient temperature is the temperature of air around the sensor device. For example, the ambient temperature corresponds to the room temperature when the sensor device is installed indoors, and corresponds to the outside temperature when the sensor device is installed outdoors.

An object of one aspect of the technology disclosed in the present application is to provide a sensor device in which the ability of a temperature sensor to follow a change in the ambient temperature is high.

### Solution to Problem

A sensor device according to an aspect of the technology disclosed in the present application, which is a sensor device to be installed on an installation surface, includes a substrate and a temperature sensor as described in claim 1. The substrate includes a substrate body that is disposed along the installation surface and an extension portion that extends from the substrate body in a direction away from the installation surface. The temperature sensor is mounted on the extension portion and detects an ambient temperature around the sensor device.

### Advantageous Effects of Invention

With the technology disclosed in the present application, it is possible to provide a sensor device in which the ability of a temperature sensor to follow a change in the ambient temperature is high.

### Brief Description of Drawings

[Fig. 1] Fig. 1 is a side sectional view illustrating a state in which a sensor device according to a first example is installed on an installation surface.
[Fig. 2] Fig. 2 is a plan view of a substrate unit of Fig. 1.
[Fig. 3] Fig. 3 is a plan view illustrating the process of bending an extension portion in the substrate unit of Fig. 1.
[Fig. 4] Fig. 4 is a graph representing the ability of a temperature sensor of Fig. 1 to follow a change in the ambient temperature.
[Fig. 5] Fig. 5 is a side sectional view illustrating a state in which a sensor device according to a first embodiment is installed on an installation surface.
[Fig. 6] Fig. 6 is a plan view of a substrate unit of Fig. 5.
[Fig. 7] Fig. 7 is a plan view illustrating the process of bending an extension portion in the substrate unit of Fig. 5.
[Fig. 8] Fig. 8 shows three-side views illustrating the process of bending an extension portion in a substrate unit according to a second example.
[Fig. 9] Fig. 9 shows three-side views illustrating the process of bending an extension portion in a substrate unit according to a third example.
[Fig. 10] Fig. 10 shows three-side views illustrating the process of bending an extension portion in a substrate unit according to a fourth example.
[Fig. 11] Fig. 11 is a partial enlarged perspective view of a sensor device according to a fifth example.
[Fig. 12] Fig. 12 is a side sectional view illustrating a state in which a sensor device according to a comparative example is installed on an installation surface.
[Fig. 13] Fig. 13 is a graph representing the ability of a temperature sensor of Fig. 12 to follow a change in the ambient temperature.

### Description of Embodiments and Examples

### [First Example]

First, a first example of the technology disclosed in the present application will be described.

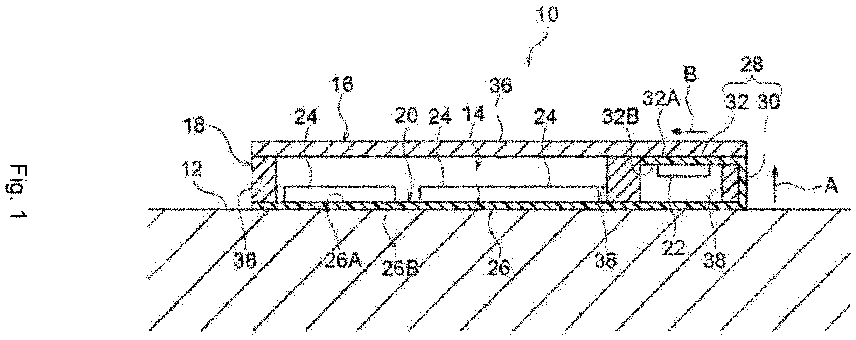

A sensor device 10 illustrated in Fig. 1 detects the ambient temperature around the sensor device 10 in a state in which the sensor device 10 is installed on an installation surface 12. The sensor device 10 is driven by an internal battery or an external power supply, and periodically transmits detection data wirelessly or by wire. The sensor device 10 may be installed either outdoors or indoors. The ambient temperature is the temperature of air around the sensor device 10. For example, the ambient temperature corresponds to the room temperature when the sensor device 10 is installed indoors, and corresponds to the outside temperature when the sensor device is installed outdoors. The sensor device 10 includes a substrate unit 14, a cover 16, and a spacer 18.

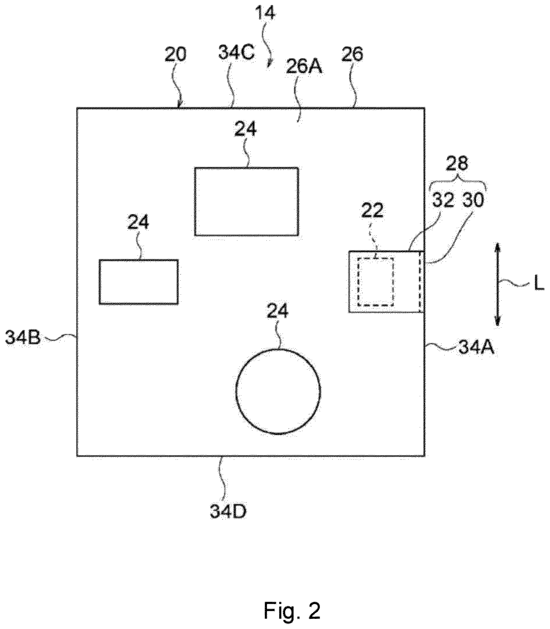

The substrate unit 14 includes a substrate 20, a temperature sensor 22, and a plurality of heat generating modules 24 (see Fig. 2 as appropriate). The substrate 20 is, for example, a flexible substrate. The substrate 20 includes a substrate body 26 and an extension portion 28. The substrate body 26 has a quadrangular flat shape in plan view, and is disposed along the installation surface 12.

A surface on one side in the thickness direction of the substrate body 26 is a mounting surface 26A, and a surface on the other side in the thickness direction of the substrate body 26 is an affixing surface 26B. The thickness direction of the substrate body 26 is the same as the direction normal to the mounting surface 26A and the affixing surface 26B of the substrate body 26. The plurality of heat generating modules 24 and other components (not shown) are mounted on the mounting surface 26A. A conductive pattern (not shown) is formed on the substrate 20. The plurality of heat generating modules 24, the temperature sensor 22 (described below), and the like are electrically connected via the conductive pattern. The affixing surface 26B is directly affixed to the installation surface 12 by using, for example, a double-sided tape.

The extension portion 28 extends from the substrate body 26 in a direction away from the installation surface 12. That is, the extension portion 28 extends from the substrate body 26 toward one side in the thickness direction of the substrate body 26 (in the direction of arrow A). The extension portion 28 includes a standing portion 30 that stands with respect to the substrate body 26, and a bent portion 32 that is bent from an upper end of the standing portion 30 toward the substrate body 26 side (in the direction of arrow B). The bent portion 32 forms a distal end portion of the extension portion 28 and faces the substrate body 26 in the thickness direction of the substrate body 26. The bent portion 32 has an upper surface 32A facing toward a side opposite from the substrate body 26 in a side view of the substrate 20, and a lower surface 32B facing toward the substrate body 26 side.

The temperature sensor 22 is, for example, a chip sensor, and is mounted on the lower surface 32B of the bent portion 32. The temperature sensor 22 detects the ambient temperature around the sensor device 10, and outputs a signal in accordance with the ambient temperature. The temperature sensor 22 is not in direct contact with any members other than the extension portion 28, and is in a state of floating in a space inside the cover 16 described below (a space between the cover 16 and the installation surface 12). To the temperature sensor 22, air outside the sensor device 10 is supplied through an opening (not shown) formed in the cover 16, an opening (not shown) formed between a top wall 36 of the cover 16 and the installation surface 12, and the like.

As illustrated in Fig. 2, the extension portion 28 extends from a part of a peripheral portion of the substrate body 26. To be specific, the substrate body 26 includes a plurality of side portions 34A to 34D that form the peripheral portion of the substrate body 26. The extension portion 28 extends from a part, in the longitudinal direction (the direction of the arrow L), of one side portion 34A among the plurality of side portions 34A to 34D. The extension portion 28 is located at a central part of the side portion 34A in the longitudinal direction.

The bent portion 32, which is the distal end portion of the extension portion 28, is located at a position that does not overlap the plurality of heat generating modules 24 in plan view of the substrate 20. Thus, the temperature sensor 22 is disposed at a position deviated from the plurality of heat generating modules 24 in plan view of the substrate 20. That is, the temperature sensor 22 is disposed at a position that does not overlap the plurality of heat generating modules 24 in plan view of the substrate 20.

As illustrated in Fig. 1, the cover 16 covers the substrate unit 14. The cover 16 includes the top wall 36 having substantially the same shape and size as the substrate body 26. The top wall 36 faces the substrate body 26 in the thickness direction of the substrate body 26. The extension portion 28 has elasticity, the standing portion 30 is in an elastically bent state (a compressed state) between the top wall 36 and the substrate body 26, and thereby the bent portion 32 is in contact with the top wall 36 in a pressed state. The spacer 18 includes a plurality of support portions 38 disposed between the top wall 36 and the substrate body 26.

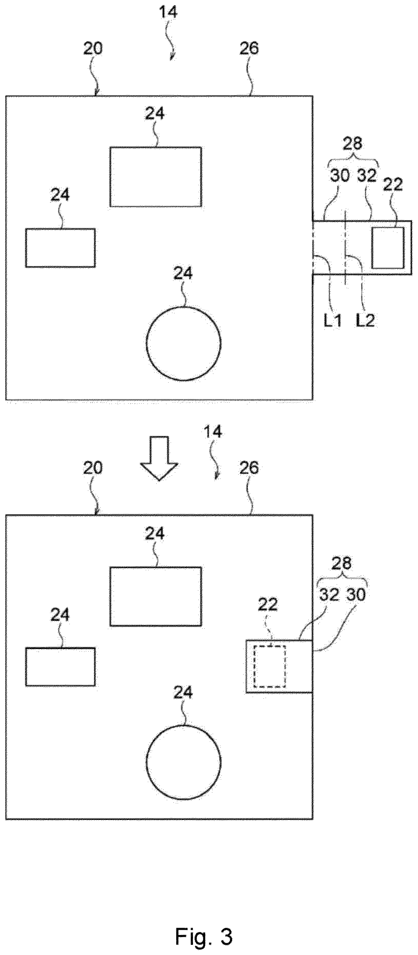

The substrate unit 14 is formed as follows. That is, as illustrated in Fig. 3, the substrate 20, having a flat shape and including the substrate body 26 and the extension portion 28, is formed; and the temperature sensor 22 and the plurality of heat generating modules 24 are mounted on the substrate 20. Then, the extension portion 28 is bent along a first bending line L1 between the substrate body 26 and the standing portion 30 and along a second bending line L2 between the standing portion 30 and the bent portion 32. Thus, the substrate unit 14 is formed.

Next, functions and advantageous effects of the first example will be described.

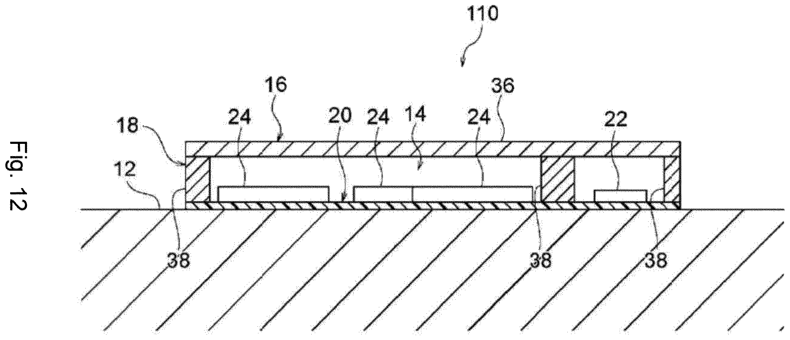

First, a comparative example will be described in order to clarify the functions and advantageous effects of the first example. Fig. 12 illustrates a sensor device 110 according to the comparative example. The sensor device 110 according to the comparative example differs from the sensor device 10 according to the first example in that the extension portion 28 (see Figs. 1 to 3) is omitted from the substrate 20. The temperature sensor 22 is mounted on the substrate 20 having a flat shape and disposed along the installation surface 12.

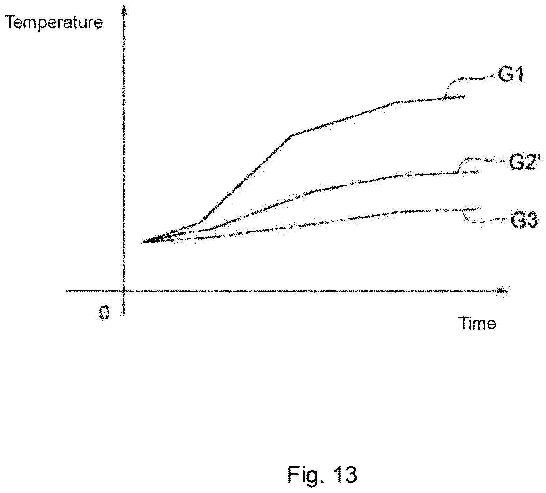

Fig. 13 is a graph representing the ability of the temperature sensor 22 to follow a change in the ambient temperature, regarding the sensor device 110 according to the comparative example. In Fig. 13, a graph G1 represents the ambient temperature, a graph G2' represents the temperature detected by the temperature sensor 22, and a graph G3 represents the temperature of the installation surface 12.

As illustrated in Fig. 13, in the sensor device 110 according to the comparative example, the temperature sensor 22 receives thermal effect of the installation surface 12, and therefore the ability of the temperature sensor 22 to follow a change in the ambient temperature is impaired. That is, in the sensor device 110 according to the comparative example, the temperature detected by the temperature sensor 22 increases in accordance with increase of the temperature of the installation surface 12, and the difference between the ambient temperature and the temperature detected by the temperature sensor 22 increases even when the ambient temperature increases.

In contrast, in the sensor device 10 according to the first example illustrated in Fig. 1, the extension portion 28 extends from the substrate body 26 in a direction away from the installation surface 12, and the temperature sensor 22 is mounted on the extension portion 28. Accordingly, it is possible to reduce thermal effect that the temperature sensor 22 receives from the installation surface 12 by the amount due to separation of the temperature sensor 22 from the installation surface 12. Thus, it is possible to improve the ability of the temperature sensor 22 to follow a change in the ambient temperature.

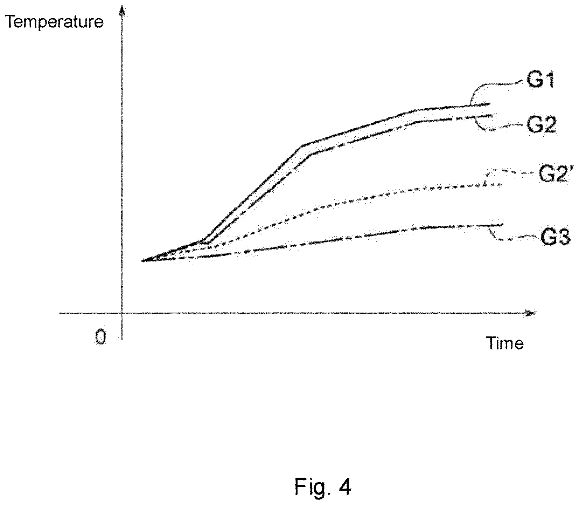

Fig. 4 is a graph representing the ability of the temperature sensor 22 to follow a change in the ambient temperature, regarding the sensor device 10 according to the first example. In Fig. 4, a graph G1 represents the ambient temperature, a graph G2 represents the temperature detected by the temperature sensor 22, and a graph G3 represents the temperature of the installation surface 12. For reference, a graph G2' represents the temperature detected by the temperature sensor 22 in the sensor device 110 according to the comparative example.

As illustrated in Fig. 4, in the sensor device 10 according to the first example, it is possible to reduce thermal effect that the temperature sensor 22 receives from the installation surface 12, and therefore the ability of the temperature sensor 22 to follow a change in the ambient temperature is high. That is, in the sensor device 10 according to the first example, the difference between the temperature of the installation surface 12 and the temperature detected by the temperature sensor 22 increases as the ambient temperature increases, and the temperature detected by the temperature sensor 22 increases in accordance with increase of the ambient temperature.

In the sensor device 10 according to the first example, the temperature detected by the temperature sensor 22 is closer to the ambient temperature than in the sensor device 110 according to the comparative example. Thus, with the sensor device 10 according to the first example, it is possible to improve the ability of the temperature sensor 22 to follow a change in the ambient temperature.

With the sensor device 10 according to the first example, the following functions and advantageous effects are further achieved. That is, with the sensor device 10 according to the first example, the temperature sensor 22 is mounted on the bent portion 32, which is the distal end portion of the extension portion 28. Accordingly, the distance between the temperature sensor 22 and the installation surface 12 can be increased by the amount due to mounting of the temperature sensor 22 on the distal end portion of the extension portion 28, and thus it is possible to further reduce thermal effect that the temperature sensor 22 receives from the installation surface 12.

The temperature sensor 22 is mounted on the lower surface 32B of the bent portion 32. Accordingly, it is possible to effectively use the space between the bent portion 32 and the substrate body 26 for disposing the temperature sensor 22 while reliably providing a large distance between the temperature sensor 22 and the installation surface 12. Thus, it is possible to achieve both the ability of the temperature sensor 22 to follow a change in the ambient temperature and reduction in size of the sensor device 10 in the height direction.

The bent portion 32 is bent from the upper end of the standing portion 30 toward the substrate body 26 side (in the direction of arrow B), and faces the substrate body 26. Accordingly, it is possible to suppress protrusion of the bent portion 32 in a lateral direction of the substrate body 26 (in the direction opposite to the arrow B). Thus, it is possible to reduce the size of the sensor device 10 in the direction along the installation surface 12.

The temperature sensor 22 is disposed at a position deviated from the heat generating module 24 in plan view of the substrate 20. Accordingly, it is possible to reduce thermal effect that the temperature sensor 22 receives from, in addition to the installation surface 12, the plurality of heat generating modules 24. Thus, it possible to further improve the ability of the temperature sensor 22 to follow a change in the ambient temperature.

The extension portion 28 has elasticity, the standing portion 30 is in an elastically bent state (compressed state) between the top wall 36 and the substrate body 26, and thereby the bent portion 32 is in contact with the top wall 36 of the cover 16 in a pressed state. Accordingly, the temperature sensor 22 can be held in a state of being separated from the installation surface 12, and thus it is possible to maintain the ability of the temperature sensor 22 to follow a change in the ambient temperature.

Next, modifications of the first example will be described.

In the first example, the substrate body 26 is directly affixed to the installation surface 12. However, a bottom wall that is to be affixed to the installation surface 12 may be formed in the cover 16, and the substrate body 26 may be disposed along the installation surface 12 with the bottom wall therebetween. The substrate body 26 may be fixed to the installation surface 12 by using a method other than affixing.

In the first example, the temperature sensor 22 outputs a signal in accordance with the ambient temperature. However, the temperature sensor 22 may output a signal in accordance with the ambient temperature and the ambient humidity. The sensor device 10 may periodically transmit the detected temperature data and the detected humidity data wirelessly or by wire.

In the first example, the substrate 20 is a flexible substrate. However, the substrate 20 may be a substrate other than a flexible substrate.

In the first example, the temperature sensor 22 is disposed at a position deviated from the plurality of heat generating modules 24 in plan view of the substrate 20. However, the temperature sensor 22 may be disposed at a position overlapping the plurality of heat generating modules 24 in plan view of the substrate 20.

In the first example, the sensor device 10 is installed on the installation surface 12 extending in the horizontal direction. However, the sensor device 10 may be installed on an installation surface 12 extending in a direction inclined with respect to the horizontal direction, or may be installed on an installation surface 12 extending in the vertical direction.

[First Embodiment] Next, a first embodiment of the technology disclosed in the present application will be described.

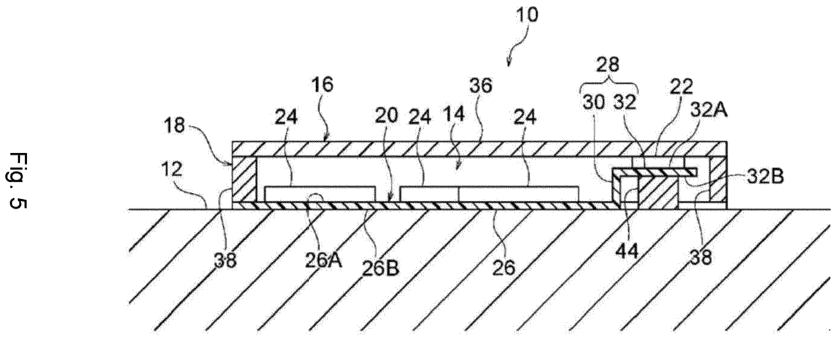

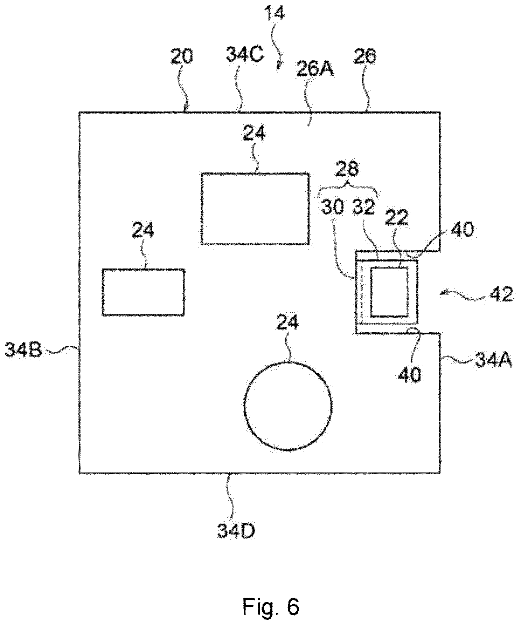

In the first embodiment illustrated in Figs. 5 to 7, the configuration of the sensor device 10 is changed from that of the first example as follows. That is, as illustrated in Fig. 6, a pair of slits 40 are formed in the substrate 20. The pair of slits 40 extend from a central part, in the longitudinal direction, of the side portion 34A toward the side portion 34B opposite to the side portion 34A. The extension portion 28 is formed by a cut-and-raised piece between the pair of slits 40.

The extension portion 28 includes the standing portion 30 that stands with respect to the substrate body 26 and the bent portion 32 that is bent with respect to the standing portion 30. The bent portion 32 overlaps a cut-out portion 42, which is formed in the substrate 20 by the cut-and-raised piece, in plan view of the substrate 20. As illustrated in Fig. 5, the bent portion 32 has the upper surface 32A facing toward a side opposite from the substrate body 26 in a side view of the substrate 20 and the lower surface 32B facing toward the substrate body 26 side. The temperature sensor 22 is mounted on the upper surface 32A of the bent portion 32, and a heat insulator 44 having a block shape is attached to the lower surface 32B of the bent portion 32.

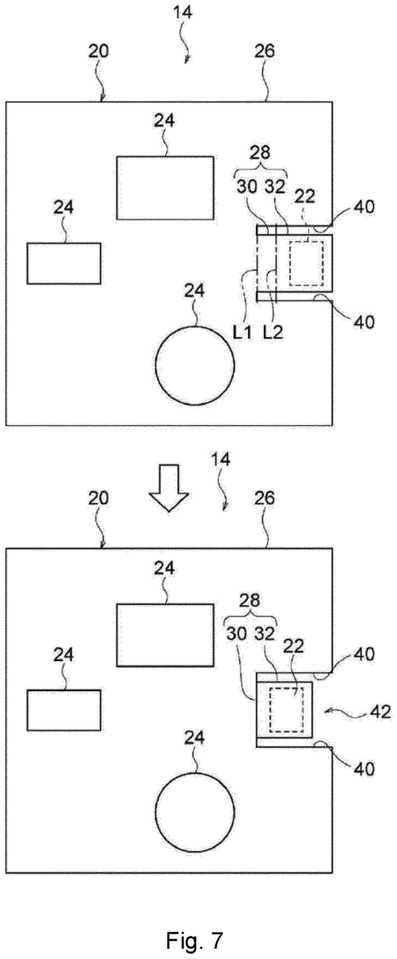

In the first embodiment, the substrate unit 14 is formed as follows. That is, as illustrated in Fig. 7, the substrate 20, having a flat shape and having the pair of slits 40, is formed; and the temperature sensor 22 and the plurality of heat generating modules 24 are mounted on the substrate 20. Then, the extension portion 28 is bent along a first bending line L1 between the substrate body 26 and the standing portion 30 and along a second bending line L2 between the standing portion 30 and the bent portion 32. Thus, the substrate unit 14 is formed.

Also with the second embodiment, as illustrated in Fig. 5, the extension portion 28 extends from the substrate body 26 in a direction away from the installation surface 12, and the temperature sensor 22 is mounted on the extension portion 28. Accordingly, it is possible to reduce thermal effect that the temperature sensor 22 receives from the installation surface 12 by the amount due to separation of the temperature sensor 22 from the installation surface 12. Thus, it is possible to improve the ability of the temperature sensor 22 to follow a change in the ambient temperature.

The temperature sensor 22 is mounted on the bent portion 32, which is the distal end portion of the extension portion 28. Accordingly, the distance between the temperature sensor 22 and the installation surface 12 can be increased by the amount due to mounting of the temperature sensor 22 on the distal end portion of the extension portion 28, and thus it is possible to further reduce thermal effect that the temperature sensor 22 receives from the installation surface 12.

The extension portion 28 is a cut-and-raised piece between the pair of slits 40 (see Fig. 6) formed in the substrate 20. Accordingly, in the process of manufacturing the substrate 20, even when manufacturing a plurality of substrates 20 (obtaining multiple pieces) from one sheet material, it is possible to efficiently manufacture the substrate 20 by suppressing generation of a waste portion in the sheet material.

The bent portion 32 has the upper surface 32A facing toward a side opposite from the substrate body 26 and the lower surface 32B facing toward the substrate body 26 side, the temperature sensor 22 is mounted on the upper surface 32A, and the heat insulator 44 is attached to the lower surface 32B. Accordingly, the heat insulator 44 is disposed between the temperature sensor 22 and the installation surface 12, and thus it is possible to more effectively reduce thermal effect that the temperature sensor 22 receives from the installation surface 12.

In the first embodiment, modifications that are the same as those of the first example may be applied.

### [Second Example]

Next, a second example of the technology disclosed in the present application will be described.

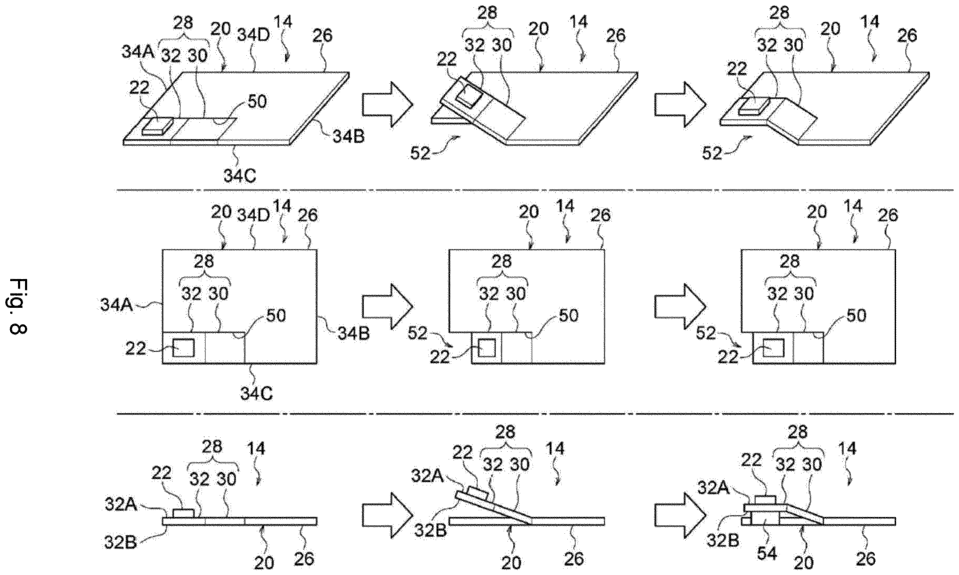

In the second example illustrated in Fig. 8, the configuration of the substrate unit 14 is changed from that of the first embodiment as follows. That is, a slit 50 extending along the side portion 34C, among the plurality of side portions 34A to 34D, is formed in the substrate 20. The extension portion 28 is formed by a cut-and-raised piece formed between the slit 50 and the side portion 34C.

The extension portion 28 includes the standing portion 30 that stands with respect to the substrate body 26 and the bent portion 32 that is bent with respect to the standing portion 30. The bent portion 32 overlaps a cut-out portion 52, which is formed in the substrate 20 by the cut-and-raised piece, in plan view of the substrate 20. The bent portion 32 has the upper surface 32A facing toward a side opposite from the substrate body 26 in a side view of the substrate 20 and the lower surface 32B facing toward the substrate body 26 side. The temperature sensor 22 is mounted on the upper surface 32A of the bent portion 32. A heat insulator 54 having a block shape is attached to the lower surface 32B of the bent portion 32.

In the second example, the substrate unit 14 is formed as follows. That is, the substrate 20, having a flat shape and having the slit 50, is formed; and the temperature sensor 22 and the plurality of heat generating modules 24 are mounted on the substrate 20. Then, the extension portion 28 is bent between the substrate body 26 and the standing portion 30 and between the standing portion 30 and the bent portion 32. Thus, the substrate unit 14 is formed.

Also with the third embodiment, the extension portion 28 extends from the substrate body 26 in a direction away from the installation surface, and the temperature sensor 22 is mounted on the extension portion 28. Accordingly, it is possible to reduce thermal effect that the temperature sensor 22 receives from the installation surface by the amount due to separation of the temperature sensor 22 from the installation surface. Thus, it is possible to improve the ability of the temperature sensor 22 to follow a change in the ambient temperature.

The temperature sensor 22 is mounted on the bent portion 32, which is the distal end portion of the extension portion 28. Accordingly, the distance between the temperature sensor 22 and the installation surface can be increased by the amount due to mounting of the temperature sensor 22 on the distal end portion of the extension portion 28, and thus it is possible to further reduce thermal effect that the temperature sensor 22 receives from the installation surface.

The extension portion 28 is a cut-and-raised piece formed between the slit 50, which is formed in the substrate 20, and the side portion 34C. Accordingly, in the process of manufacturing the substrate 20, even when manufacturing a plurality of substrates 20 (obtaining multiple pieces) from one sheet material, it is possible to efficiently manufacture the substrate 20 by suppressing generation of a waste portion in the sheet material.

The bent portion 32 has the upper surface 32A facing toward a side opposite from the substrate body 26 and the lower surface 32B facing toward the substrate body 26 side, the temperature sensor 22 is mounted on the upper surface 32A, and the heat insulator 54 is attached to the lower surface 32B. Accordingly, the heat insulator 54 is disposed between the temperature sensor 22 and the installation surface, and thus it is possible to more effectively reduce thermal effect that the temperature sensor 22 receives from the installation surface.

In the second example, modifications that are the same as those of the first embodiment may be applied.

### [Third Example]

Next, a third example of the technology disclosed in the present application will be described.

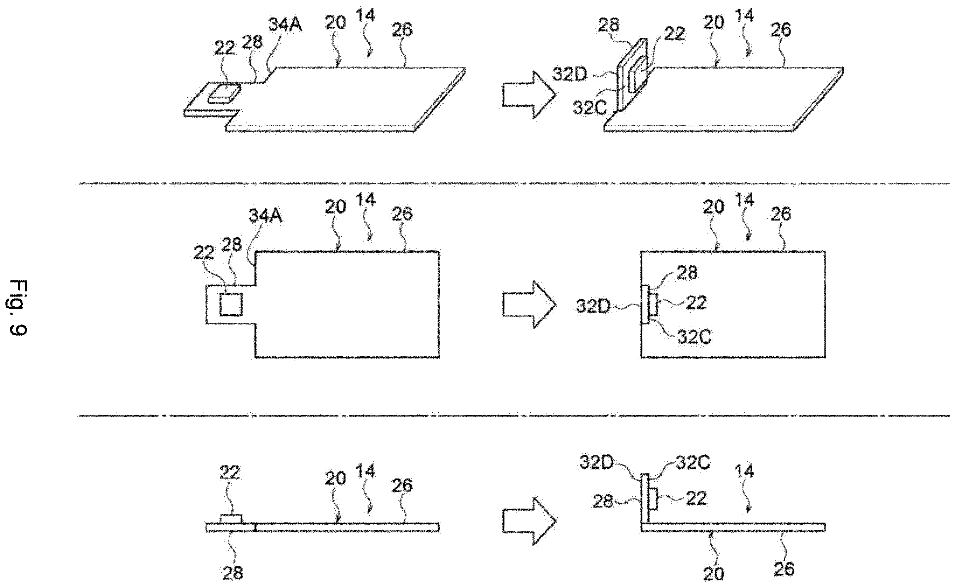

In the third example illustrated in Fig. 9, the configuration of the substrate unit 14 is changed from that of the first example as follows. That is, the extension portion 28 has a configuration in which the bent portion 32 (see Fig. 1) is omitted. The extension portion 28 is an example of a "standing portion" and stands with respect to the substrate body 26. The extension portion 28 is formed in a part of a peripheral portion of the substrate body 26 (for example, a central part of the side portion 34A in the longitudinal direction). The extension portion 28 has an inner surface 32C facing toward the substrate body 26 side in a side view of the substrate 20 and an outer surface 32D facing toward a side opposite from the substrate body 26, and the temperature sensor 22 is mounted on the inner surface 32C.

In the third example, the substrate unit 14 is formed as follows. That is, the substrate 20, having a flat shape and including the extension portion 28, is formed; and the temperature sensor 22 and the plurality of heat generating modules 24 are mounted on the substrate 20. Then, the extension portion 28 is bent between the substrate body 26 and the standing portion 30. Thus, the substrate unit 14 is formed.

Also with the third example, the extension portion 28 extends from the substrate body 26 in a direction away from the installation surface, and the temperature sensor 22 is mounted on the extension portion 28. Accordingly, it is possible to reduce thermal effect that the temperature sensor 22 receives from the installation surface by the amount due to separation of the temperature sensor 22 from the installation surface. Thus, it is possible to improve the ability of the temperature sensor 22 to follow a change in the ambient temperature.

The extension portion 28 has the inner surface 32C facing toward the substrate body 26 side and an outer surface 32D facing toward a side opposite from the substrate body 26 in a side view of the substrate 20, and the temperature sensor 22 is mounted on the inner surface 32C. Accordingly, it is possible to suppress protrusion of the temperature sensor 22 in a lateral direction of the substrate body 26.

In the third example, modifications that are the same as those of the first example may be applied.

### [Fourth Example]

Next, a fourth example of the technology disclosed in the present application will be described.

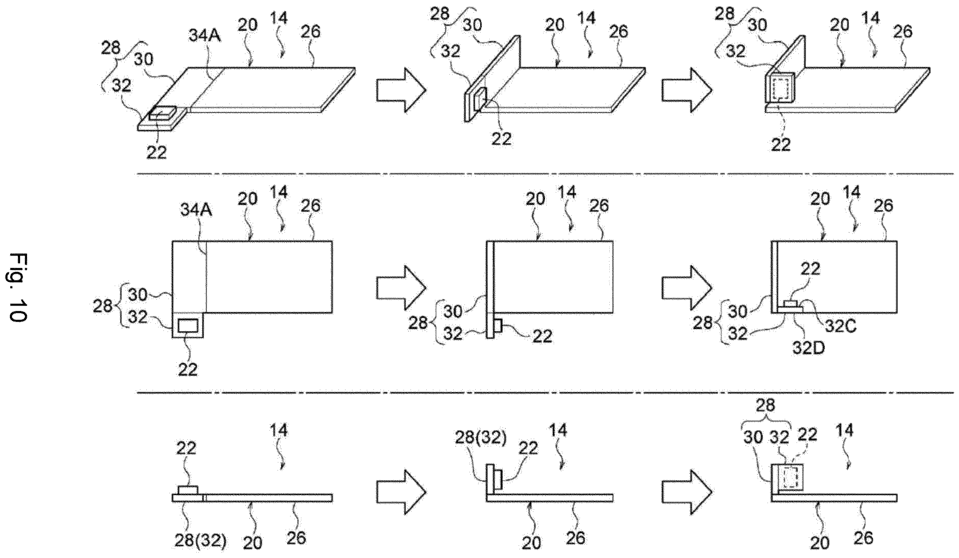

In the fourth example illustrated in Fig. 10, the configuration of the substrate unit 14 is changed from that of the first example as follows. That is, the extension portion 28 is formed over the entire length of the side portion 34A in the longitudinal direction. The extension portion 28 includes the standing portion 30 that stands with respect to the substrate body 26 and the bent portion 32 that is bent from a side part of the standing portion 30 toward the substrate body 26 side. The bent portion 32 has the inner surface 32C facing toward the substrate body 26 side and the outer surface 32D facing toward a side opposite from the substrate body 26, and the temperature sensor 22 is mounted on the inner surface 32C.

In the fourth example, the substrate unit 14 is formed as follows. That is, the substrate 20, having a flat shape and including the extension portion 28, is formed; and the temperature sensor 22 and the plurality of heat generating modules 24 are mounted on the substrate 20. Then, the extension portion 28 is bent between the substrate body 26 and the standing portion 30 and between the standing portion 30 and the bent portion 32. Thus, the substrate unit 14 is formed.

Also with the fourth example, the extension portion 28 extends from the substrate body 26 in a direction away from the installation surface, and the temperature sensor 22 is mounted on the extension portion 28. Accordingly, it is possible to reduce thermal effect that the temperature sensor 22 receives from the installation surface by the amount due to separation of the temperature sensor 22 from the installation surface. Thus, it is possible to improve the ability of the temperature sensor 22 to follow a change in the ambient temperature.

The bent portion 32 has the inner surface 32C facing toward the substrate body 26 side and an outer surface 32D facing toward a side opposite from the substrate body 26, and the temperature sensor 22 is mounted on the inner surface 32C. Accordingly, it is possible to suppress protrusion of the temperature sensor 22 in a lateral direction of the substrate body 26.

In the fourth example, modifications that are the same as those of the first embodiment may be applied.

### [Fifth example]

Next, a fifth example of the technology disclosed in the present application will be described.

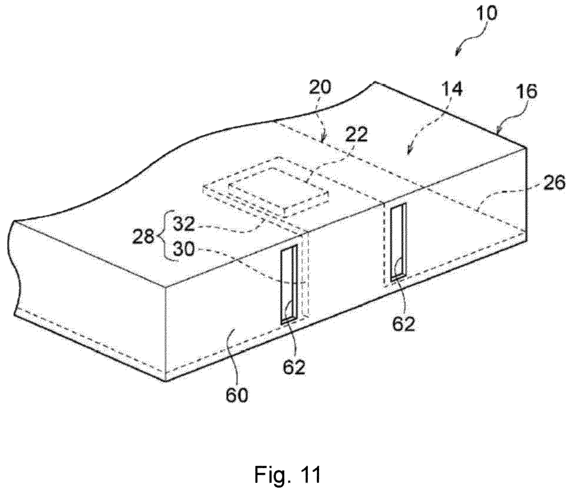

In the fifth example illustrated in Fig. 11, the configuration of the sensor device 10 is changed from that of the first example as follows. That is, the cover 16 includes a side wall 60 extending along a peripheral portion of the substrate 20, and a pair of openings 62 are formed in the side wall 60 in the vicinity of the temperature sensor 22. The pair of openings 62 are disposed on both sides of the extension portion 28 on which the temperature sensor 22 is mounted. For example, a dustproof and drip-proof film having air permeability is provided in the pair of openings 62.

When the openings 62 are formed in the side wall 60 in the vicinity of the temperature sensor 22 as described above, air outside the sensor device 10 can be supplied to the temperature sensor 22 through the openings 62, and thus it is possible to improve the ability of the temperature sensor 22 to follow a change in the ambient temperature.

The cover 16 according to the fifth example, having the openings 62, may be used in combination with the configuration of the substrate unit 14 according to any of the first to fourth examples and to the first embodiment,

Heretofore, the first to fifth examples and the first embodiment of the technology disclosed in the present application have been described.

## Claims

1. A sensor device to be installed on an installation surface, comprising:
a substrate (20) including a substrate body (26) that is disposable along the installation surface (12) and an extension portion (28) that extends from the substrate body (26) in a direction (A) away from the installation surface (12); and
a temperature sensor (22) that is mounted on the extension portion (28) and that is configured to detect an ambient temperature around the sensor device;
wherein the substrate body (26) includes a plurality of side portions (34A to 34D) that form the peripheral portion of the substrate body (26),
**characterized in that** the extension portion (28) is a cut-and-raised piece that is formed in the substrate (20) between a pair of slits (40) that are formed in the substrate (20), the pair of slits (40) extending from a central part, in the longitudinal direction, of a first side portion (34A) toward a second side portion (34B) opposite to the first side portion (34A).

2. The sensor device according to Claim 1,
wherein the substrate body (26) has an affixing surface (26B) that is affixable to the installation surface (12) .

3. The sensor device according to Claim 1 or 2,
wherein the substrate (20) is a flexible substrate.

4. The sensor device according to any one of Claims 1 to 3,
wherein the temperature sensor (22) is not in direct contact with any members other than the extension portion (28).

5. The sensor device according to Claim 1,
wherein the extension portion includes a standing portion (30) that stands with respect to the substrate body (26) and a bent portion (32) that is bent from an upper end of the standing portion (30), and
wherein the temperature sensor (22) is mounted on the bent portion (32).

6. The sensor device according to Claim 5,
wherein the bent portion (32) has an upper surface (32A) facing toward a side opposite from the substrate body (26), and
wherein the temperature sensor (22) is mounted on the upper surface (32A).

7. The sensor device according to Claim 6,
wherein the bent portion (32) has a lower surface (32B) facing toward the substrate body (26) side, and
wherein a heat insulator (44) is attached to the lower surface (32B).

## Patentansprüche

1. Sensorvorrichtung, die auf einer Installationsfläche zu installieren ist, umfassend:
ein Substrat (20) aufweisend einen Substratkörper (26), der entlang der Installationsfläche (12) anordenbar ist, und einen Erweiterungsabschnitt (28), der sich von dem Substratkörper (26) in eine Richtung (A) weg von der Installationsfläche (12) erstreckt; und
einen Temperatursensor (22), der an dem Erweiterungsabschnitt (28) angebracht ist und der ausgestaltet ist, um eine Umgebungstemperatur um die Sensorvorrichtung zu erfassen;
wobei der Substratkörper (26) mehrere Seitenabschnitte (34A bis 34D) aufweist, die den Umfangsabschnitt des Substratkörpers (26) bilden,
**dadurch gekennzeichnet, dass** der Erweiterungsabschnitt (28) ein geschnittenes und hochgezogenes Teil ist, das in dem Substrat (20) zwischen einem Paar von Schlitzen (40) ausgebildet ist, die in dem Substrat (20) ausgebildet sind, wobei sich das Paar von Schlitzen (40) von einem zentralen Teil in der Längsrichtung eines ersten Seitenabschnitts (34A) zu einem zweiten Seitenabschnitt (34B) gegenüber dem ersten Seitenabschnitt (34A) erstreckt.

2. Sensorvorrichtung nach Anspruch 1,
wobei der Substratkörper (26) eine Anbringungsfläche (26B) aufweist, die an der Installationsfläche (12) anbringbar ist.

3. Sensorvorrichtung nach Anspruch 1 oder 2,
wobei das Substrat (20) ein flexibles Substrat ist.

4. Sensorvorrichtung nach einem der Ansprüche 1 bis 3,
wobei der Temperatursensor (22) nicht in direktem Kontakt mit anderen Elementen außer dem Erweiterungsabschnitt (28) ist.

5. Sensorvorrichtung nach Anspruch 1,
wobei der Erweiterungsabschnitt einen stehenden Abschnitt (30), der in Bezug auf den Substratkörper (26) steht, und einen gebogenen Abschnitt (32), der von einem oberen Ende des stehenden Abschnitts (30) gebogen ist, umfasst, und
wobei der Temperatursensor (22) an dem gebogenen Abschnitt (32) angebracht ist.

6. Sensorvorrichtung nach Anspruch 5,
wobei der gebogene Abschnitt (32) eine obere Fläche (32A) aufweist, die einer dem Substratkörper (26) gegenüberliegenden Seite zugewandt ist, und
wobei der Temperatursensor (22) an der oberen Fläche (32A) angebracht ist.

7. Sensorvorrichtung nach Anspruch 6,
wobei der gebogene Abschnitt (32) eine untere Fläche (32B) aufweist, die der Seite des Substratkörpers (26) zugewandt ist, und
wobei ein Wärmeisolator (44) an der unteren Fläche (32B) angebracht ist.

## Revendications

1. Dispositif de capteur à installer sur une surface d'installation, comprenant :
un substrat (20) comportant un corps de substrat (26) qui est jetable le long de la surface d'installation (12) et une partie d'extension (28) qui s'étend à partir du corps de substrat (26) dans une direction (A) éloignée de la surface d'installation (12) ; et
un capteur de température (22) qui est monté sur la partie d'extension (28) et configuré pour détecter une température ambiante autour du dispositif de détection ;
dans lequel le corps du substrat (26) comporte une pluralité de parties latérales (34A à 34D) qui forment la partie périphérique du corps du substrat (26),
**caractérisé en ce que** la partie d'extension (28) est une pièce coupée et soulevée qui est formée dans le substrat (20) entre une paire de fentes (40) qui sont formées dans le substrat (20), la paire de fentes (40) s'étendant d'une partie centrale, dans la direction longitudinale, d'une première partie latérale (34A) vers une seconde partie latérale (34B) opposée à la première partie latérale (34A).

2. Dispositif de capteur selon la revendication 1,
dans lequel le corps du substrat (26) a une surface de fixation (26B) qui peut être fixée à la surface d'installation (12).

3. Dispositif de capteur selon la revendication 1 ou 2,
dans lequel le substrat (20) est un substrat souple.

4. Dispositif de capteur selon l'une quelconque des revendications 1 à 3,
dans lequel le capteur de température (22) n'est pas en contact direct avec des éléments autres que la partie d'extension (28).

5. Dispositif de capteur selon la revendication 1,
dans lequel la partie d'extension comporte une partie debout (30) qui se tient par rapport au corps du substrat (26) et une partie courbée (32) qui est courbée à partir d'une extrémité supérieure de la partie debout (30), et
dans lequel le capteur de température (22) est monté sur la partie courbée (32).

6. Dispositif de capteur selon la revendication 5,
dans lequel la partie pliée (32) a une surface supérieure (32A) orientée vers un côté opposé au corps du substrat (26), et
dans lequel le capteur de température (22) est monté sur la surface supérieure (32A).

7. Dispositif de capteur selon la revendication 6,
dans lequel la partie pliée (32) a une surface inférieure (32B) orientée vers le côté du corps du substrat (26), et
dans lequel un isolant thermique (44) est fixé à la surface inférieure (32B).
